# EUROPÄISCHE PATENTSCHRIFT

(11) **EP 2 035 694 B1**
(45) Veröffentlichungstag und Bekanntmachung des Hinweises auf die Patenterteilung: **23.01.2013**
(21) Anmeldenummer: 07726027.1
(22) Anmeldetag: 14.06.2007
(51) Int. Cl.: F03D 1/06

(54) **ROTORNABE EINER WINDENERGIEANLAGE**
ROTOR HUB OF A WIND ENERGY PLANT
MOYEU DE ROTOR D'UNE ÉOLIENNE

(30) Priorität: 03.07.2006 DE 102006031174
(43) Veröffentlichungstag der Anmeldung: 18.03.2009
(73) Patentinhaber: REpower Systems SE, 22297 Hamburg (DE)
(72) Erfinder: QUELL, Peter, 24783 Osterrönfeld (DE)
(74) Vertreter: Grebner, Christian Georg Rudolf
(86) Internationale Anmeldenummer: PCT/EP2007/005263
(87) Internationale Veröffentlichungsnummer: WO 2008/003389

(56) Entgegenhaltungen:
- WO-A-01/42647
- WO-A-02/06667
- WO-A-03/060319
- WO-A-2004/090326

## Beschreibung

Die Erfindung betrifft eine Rotornabe einer Windenergieanlage für einen Rotor, insbesondere mit wenigstens einem Rotorblatt, wobei ein Nabenkernkörper der Rotornabe und wenigstens ein Nabenau-βenkörper der Rotornabe miteinander verbunden sind, wobei der Nabenaußenkörper eine Rotorblattanschlußfläche aufweist. Ferner betrifft die Erfindung eine Windenergieanlage mit einer Rotornabe.

Bei Windenergieanlagen wird ein Rotorblatt mit einem Blattlager drehbar an einer Rotornabe befestigt. Bekannte Windenergieanlagen bestehen aus einem Turm, einer auf dem oberen Ende des Turms angeordneten Gondel, einem Rotor, der um eine Rotordrehachse drehbar außen an der Gondel gelagert ist und der eine Rotornabe sowie mindestens ein sich von der Rotornabe erstreckendes Rotorblatt aufweist. Eine gattungsgemäße Windenergieanlage ist beispielsweise in DE-AB-10 2004 023 773 beschrieben, die eine Rotornabe mit einem Blattverstellsystem aufweist.

Des Weiteren offenbart EP-B-1 303 698 eine Rotornabe einer Windenergieanlage. Die Rotornabe stellt eine mechanische Verbindung zwischen der Rotorwelle bzw. der Rotorachse und den Rotorblättern her.

Außerdem offenbart WO-A-02/06667 eine Rotorblattnabe einer Windenergieanlage, wobei die Rotorblattnabe einen Nabenkern und ein oder mehrere Nabenaußenteile zur Aufnahme eines Rotorblatts aufweist, wobei der Nabenkern zur Aufnahme eines Nabenaußenteils einen im Wesentlichen oval gebildeten Flansch aufweist.

Ausgehend von diesem Stand der Technik ist es Aufgabe der vorliegenden Erfindung, eine Rotornabe bereit zu stellen, die sich auf einfache Weise und kostengünstig fertigen sowie montieren lässt, wobei es möglich sein soll, größere Rotornaben auf effiziente Weise zu transportieren.

Gelöst wird diese Aufgabe durch eine Rotornabe einer Windenergieanlage für einen Rotor, insbesondere mit wenigstens einem Rotorblatt, wobei ein Nabenkernkörper der Rotornabe und wenigstens ein Nabenaußenkörper der Rotornabe mittels einer Flanschverbindung miteinander verbunden sind,- wobei der Nabenaußenkörper eine Rotorblattanschlußfläche aufweist, die dadurch weitergebildet wird, dass die Flanschverbindung mit einer vorbestimmten Neigung zur Drehachse des Rotors ausgebildet ist, wobei die Neigung der Flanschverbindung stärker als die Neigung der Rotorblattanschlussfläche des Nabenaußenkörpers ausgebildet ist.

Insbesondere wird eine mehrteilige Rotornabe bereitgestellt, die im fertig montierten Zustand beispielsweise an einer Gondel einer Windenergieanlage aus einem separaten Nabenkernkörper und wenigstens einem oder mehreren separaten Nabenaußenkörpern gebildet ist. Im Rahmen der Erfindung ist es möglich, dass ein Rotorblatt mit einem Nabenaußenkörper bereits versehen bzw. ausgebildet ist.

Die Erfindung beruht auf dem Gedanken, dass bei einem gelenklosen Rotor bzw. einer starren Rotornabe einer Windenergieanlage, bei dem eine starre Verbindung der Rotorblätter mit der Rotorachse bzw. -welle über die gelenklose bzw. starre Rotornabe erfolgt, eine Flanschverbindung vorgesehen ist, die in einer Anschlussebene angeordnet ist und mit der Drehachse des Rotors bzw. der Rotorwelle einen vorbestimmten Winkel einschließt. Im geometrischen Sinne durchstößt die Rotorachse die Ebene, in der die ebene Anschlussfläche des Verbindungsflansches bzw. der Flanschverbindung zwischen dem Nabenkernkörper und dem Nabenaußenkörper liegt. Hierzu ist die Flanschverbindung zwischen dem Nabenkernkörper, der mit der Rotorwelle verbunden wird oder ist, und dem Nabenau-βenkörper zwischen dem Nabenkernkörper und dem daran angeordneten Rotorblatt vorzugsweise als ebene Anschlussfläche ausgebildet.

Gegenüber den bisherigen Anschlüssen der Verbindungskörper zwischen dem äußeren Rotorblatt und dem Nabenkernkörper ist die Ebene, in der die Flanschverbindung zwischen dem Kernkörper und dem Verbindungskörper angeordnet ist, geneigt ausgebildet. Bei den bisherigen Anschlüssen sind die Anschlussebenen der Flansche und der Rotorachse parallel zueinander ausgerichtet, so dass sie sich nicht berühren bzw. schneiden. Darüber sind in anderen bekannten Anschlüssen gemäß dem Stand der Technik die Anschlussebenen für Rotorblätter mit einem Neigungswinkel im Bereich von 3° zur Rotationsachse geneigt. Dieser Neigungswinkel der Anschlussebene der Rotorblätter ist gemäß der Erfindung geringer als der Neigungswinkel der Anschlussfläche zwischen dem Nabenkernkörper und dem Nabenaußenkörper bzw. den -körpern.

Gemäß der Erfindung wird eine Rotornabe einer Windenergieanlage bereitgestellt, die einen Nabenkernkörper als Rotornabenkörper aufweist, wobei der Nabenkernkörper mit einer Rotorwelle verbunden wird oder ist. Der Nabenkernkörper weist ferner wenigstens eine Flanschverbindung auf, deren Oberfläche zur Drehachse der Rotorwelle in einem vorbestimmten Winkel geneigt ist. Ferner ist festzuhalten, dass gemäß der Erfindung die Oberfläche der Flanschverbindung in einem vorbestimmten, nicht rechtwinkeligen Winkel zu einer Rotorblattachse eines Rotorblatts angeordnet ist.

Der Nabenkernkörper verbindet die Rotornabe als Zentralstück mit der Rotorwelle. Daran angeordnet sind an den zur Drehachse des Rotors geneigten angeordneten Flanschverbindungen die Verbindungskörper bzw. Nabenaußenkörper, so dass daran die Rotorblätter montiert werden können oder sind.

Durch die schräg geneigten bzw. ausgebildeten zur Rotordrehachse verlaufenden Flanschverbindungen ist es möglich, eine teilbare d.h. mehrteilige Rotornabe auszubilden, so dass dadurch der Transport von Einzelteilen der Rotornabe, z.B. Nabenkernkörper und/oder Nabenaußenkörper, erleichtert wird. Am Aufstellungsort einer Windenergieanlage werden anschließend die dorthin transportierten Einzelteile der Rotornabe zusammengesetzt und beispielsweise mit Hilfe von Schraubverbindungen über die Flanschanschlüsse miteinander verbunden. Gemäß der Erfindung ist es damit möglich, beispielsweise Rotornaben mit Flanschverbindungen von 3 m bis 6 m im Durchmesser nach ihrer Herstellung zum Aufstellungsort ohne Probleme zu transportieren.

Gemäß einer alternativen Lösung der Aufgabe ist bei einer Rotornabe einer Windenergieanlage für einen Rotor, insbesondere mit wenigstens einem Rotorblatt, wobei ein Nabenkernkörper der Rotornabe und wenigstens ein Nabenaußenkörper der Rotornabe mittels einer kreisförmigen Flanschverbindung miteinander verbunden sind oder werden, wobei der Nabenaußenkörper eine Rotorblattanschlußfläche aufweist, vorgesehen, dass die Höhe des Nabenkernkörpers kleiner als der Durchmesser der kreisförmigen Rotorblattanschlussfläche des Nabenaußenkörpers ist.

In einer weiteren Ausgestaltung ist vorgesehen, dass die Höhe des Nabenkernkörpers kleiner als der Durchmesser der, insbesondere kreisförmigen bzw. runden, Rotorblattanschlussfläche des Nabenaußenkörpers ist, wobei insbesondere die Flanschverbindung zwischen dem Nabenkernkörper und dem Nabenaußenkörper vorteilhafterweise kreisförmig bzw. rund ausgebildet ist. Dadurch ist es möglich, eine mehrteilige Rotornabe bereitzustellen, die durch die geringere

Höhe des Nabenkernkörpers im Vergleich zum, vorzugsweise kreisförmigen, Blattflanschdurchmesser des Nabenaußenkörpers einen .einfachen Transport des Nabenkernkörpers erlaubt, da die Höhe des Nabenkernkörpers als Transporthöhe des Nabenkernkörpers angesehen werden kann. Beispielsweise kann somit ein Nabenkernkörper mit einem Anschlussdurchmesser des Ringflansches zur Rotorwellenseite von 3 m und einer Höhe von unter 4 m auf einem Transportfahrzeug transportiert werden, wobei an die fertig montierte Rotornabe mit Nabenkernkörper und wenigstens einem Nabenaußenkörper ein Rotorblatt mit einem (runden) Blattflanschdurchmesser von über 4 m angebracht werden kann. Beispielsweise ist die Höhe des Nabenkernkörpers zwischen 0,5 m bis 2,5 m kleiner als der Blattflanschdurchmesser.

In einer bevorzugten Ausführungsform sind die Flanschverbindung zwischen dem Nabenkernkörper und der Nabenaußenkörper kreisförmig, d.h. rund, ausgebildet. Dies hat weiterhin den Vorteil, dass aufgrund der runden Anschlussstelle im Bereich der Flanschverbindung eine festere Verbindung zwischen dem Nabenkörper und dem daran befestigten Verbindungskörper bei der Montage hergestellt wird, da mehr Schrauben über den kreisrunden Flanschumfang verteilt sind, im Vergleich zu einem ovalförmigen Flanschumfang. Außerdem ergeben sich bei der Fertigung zahlreiche Vorteile.

Um einen Rotor bereitzustellen, der mehrere Rotorblätter aufweist, ist ferner vorgesehen, dass mehrere Flanschverbindungen an der Rotornabe zwischen dem Nabenkernkörper und mehreren Naben-Rotorblatt-Verbindungskörpern ausgebildet sind.

Dazu ist weiterhin vorteilhafterweise vorgesehen, dass die Flanschverbindungen gleichmäßig am Nabenkernkörper angeordnet bzw. vorgesehen sind.

Insbesondere ist der oder jeder Nabenaußenkörper mit einem Rotorblatt verbunden. Bei einer Windenergieanlage mit einem Rotor, der mehrere Rotorblätter aufweist, sind die Verbindungskörper jeweils mit einem Rotorblatt verbunden.

Günstig ist es ferner, wenn der Nabenaußenkörper und der Nabenkernkörper dauerhaft miteinander verbunden sind.

Um einen Zugang für das Wartungspersonal am Rotor zu ermöglichen, ist ferner vorgesehen, dass am Nabenkernkörper eine Zugangsöffnung vorgesehen ist. Im Rahmen der Erfindung kann eine weitere Zugangsöffnung auch an einer anderen Stelle des Rotors bzw. der Gondel vorgesehen sein.

Insbesondere ist die Zugangsöffnung im Bereich der Rotorachse am Nabenkernkörper ausgebildet. Denkbar ist auch, dass die Zugangsöffnung an einer anderen Stelle der Rotornabe vorgesehen ist.

Zur Befestigung von Rotorblättern an der Rotornabe weist der Nabenaußenkörper zur Rotorblattseite hin eine Flanschverbindung auf, so dass daran ein Rotorblatt befestigt bzw. angeordnet wird. Die Flanschverbindung wird auch als Rotorblattflansch oder Blattflansch bezeichnet.

Vorzugsweise ist die rotorblattseitige Flanschverbindung kreisförmig ausgebildet, um eine zuverlässige Verbindung zwischen dem Rotorblatt und dem jeweiligen Verbindungskörper herzustellen und auf einfache Weise die Verstellung des Rotorblatts mittels eines runden Blattlagers zu ermöglichen.

Des Weiteren wird gemäß einer bevorzugten Ausführungsform der erfindungsgemäßen Rotornabe vorgeschlagen, dass der Durchmesser der rotorblattseitigen Flanschverbindung des Nabenaußenkörpers größer als der Durchmesser des, insbesondere kreisförmigen, Durchmessers der nabenkernkörperseitigen Flanschverbindung ist. Hierdurch ergeben sich optimierte Verhältnisse im Hinblick auf die Steifigkeit, das Gewicht und die Dimensionen eines Nabenkernkörpers bzw. einer erfindungsgemäßen Rotornabe. Bei großen Rotornaben, an denen Rotorblätter beispielsweise mit einem Blattflanschdurchmesser von mehr als 4 m angebracht sind, ist hierdurch ein einfacher Transport möglich, da die Transporthöhe bzw. Höhe des Nabenkernkörpers kleiner als der Blattflanschdurchmesser ist.

Außerdem wird die Aufgabe gelöst durch eine Windenergieanlage, die mit einer erfindungsgemäßen, geteilten, bzw. teilbaren Rotornabe mit zur Drehachse geneigten Anschlussflächen versehen ist. Zur Vermeidung von Wiederholungen wird auf die voranstehenden Ausführungen explizit hingewiesen.

Die Erfindung wird nachfolgend ohne Beschränkung des allgemeinen Erfindungsgedankens anhand eines Ausführungsbeispiels exemplarisch beschrieben, wobei bezüglich aller im Text nicht näher erläuterten erfindungsgemäßen Einzelheiten ausdrücklich auf die Zeichnungen verwiesen wird. Es zeigen:
- Fig. 1: einen Querschnitt durch eine erfindungsgemäße Rotornabe und
- Fig. 2: eine Draufsicht auf die erfindungsgemäße Rotornabe gemäß Fig. 1.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

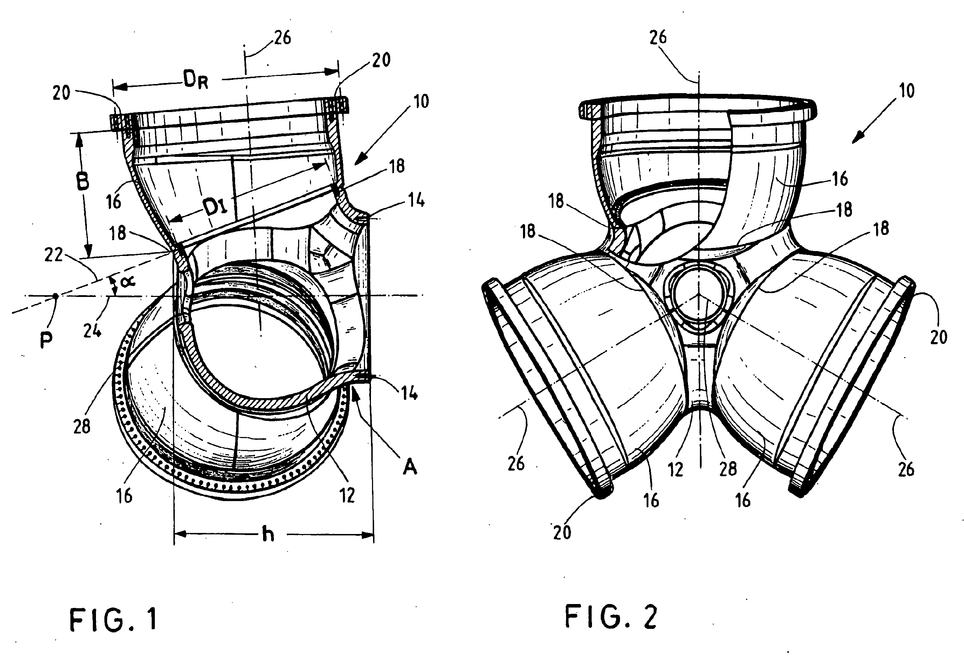

Fig. 1 zeigt im Querschnitt eine Rotornabe 10. Die Rotornabe 10 verfügt über einen Nabenkernkörper 12, der über einen Ringflansch 14 mit der Rotorwelle der (nicht dargestellten) Windenergieanlage verbunden ist. Aufgrund der Querschnittsdarstellung ist in Fig. 1 die Verbindung des Nabenkernkörpers 12 mit einem Nabenaußenkörper 16 dargestellt. Typischerweise hat der Ringflansch 14 beispielsweise einen Durchmesser von 3 m für eine Windenergieanlage mit einer Leistung von 8 bis 12 Megawatt.

Ferner ist in Fig. 1 die Höhe h des Nabenkernkörpers 12 eingezeichnet, die beispielsweise unter 4 m liegt. Die Höhe h ist für einen Transport des Nabenkernkörpers 12 eine entscheidende Größe, da hierdurch die Transporthöhe eines Transportfahrzeugs bestimmt wird. Ein einfacher Transport über normale Straßen ist bei einer Höhe von unter 4 m problemlos möglich.

Wie aus Fig. 2 hervorgeht, ist die Rotornabe 10 in der Draufsicht so ausgebildet, dass drei Nabenaußenkörper 16 sternförmig und gleichmäßig an dem Nabenkernkörper 12 angeordnet sind. An den Nabenaußenkörper 16 sind über entsprechende Flansche und Blattlager 20 die (nicht dargestellten) Rotorblätter drehbar mit dem Nabenaußenkörper 16 verbunden.

Ferner ist aus Fig. 2 zu ersehen, dass am Nabenkernkörper 12 drei Außenteile in Form der Nabenaußenkörper 16 angeordnet sind. Somit besteht die Rotornabe 10 aus einer Anzahl von separaten Körpern bzw. einzelnen Bauteilen, die bei Errichtung einer Windenergieanlage miteinander verbunden werden.

Um den Nabenaußenkörper 16 mit dem Nabenkernkörper 12 zu verbinden, ist zwischen den beiden Körpern ein Flansch 18 vorgesehen, so dass die beiden Körper 12 und 16 fest zusammengefügt und miteinander verbunden sind. Aus Fig. 1 geht hervor, dass die Flanschverbindung 18 in einer Ebene 22 liegt, die in einem vorbestimmten Winkel zur Drehachse 24 des Rotors steht. Hierbei schließen die Ebene 22 und die Drehachse 24 einen Winkel α ein, der als spitzwinkeliger Winkel ausgebildet ist. Im geometrischen Sinne durchstößt die Drehachse 24 die Ebene 22 in einem Punkt P.

Erfindungsgemäß sind alle Verbindungsflansche bzw. Flanschverbindungen 18 am Nabenkernkörper 12 für die Nabenaußenkörper 16 in einem vorbestimmten Winkel zur Drehachse 24 des Rotors ausgebildet.

Dadurch, dass die Ebene 22 nicht parallel zur Drehachse 24 angeordnet ist, ist es möglich, den Nabenkernkörper 12 platzsparend für einen Transport sowie, größere Nabenkernkörper 12 einer Rotornabe 10 bis zu einer Größe von 6 m zu bauen, ohne dass beim Transport größere Schwierigkeiten entstehen. Durch die Schrägstellung der Ebene 22, in der die Flanschverbindung 18 angeordnet ist, wird es möglich, den Nabenkörper 12 kompakt herzustellen. Bevorzugterweise werden Einzelstücke in einem Gießverfahren hergestellt.

Darüber hinaus ist in Fig. 1 eine Rotorblattachse 26 eines (hier nicht dargestellten) Rotorblatts eingezeichnet, die ebenfalls in einem vorbestimmten Winkel, unter Ausschluss von einem rechten Winkel und einem Winkelbereich zwischen 85° bis 90° zur Rotorachse 24 liegt.

Weiterhin ist die Flanschverbindung 18 am Nabenkernkörper 12 kreisrund bzw. kreisförmig aus Fertigungsgründen ausgebildet, wodurch eine feste und stabile Verbindung zwischen dem Nabenkernkörper 12 und dem Nabenaußenkörper 16 hergestellt wird.

Außerdem verfügt der Nabenkernkörper 12 auf der Außenseite des Nabenkernkörpers 12, d.h. auf der der Gondel einer Windenergieanlage abgewandten Seite, über eine Zugangsöffnung 28, die so dimensioniert ist, dass Wartungspersonal in das als Hohlteil ausgebildeten Nabenkernkörper 12 zu Wartungsarbeiten einsteigen kann. Selbstverständlich ist es im Rahmen der Erfindung möglich, an anderer Stelle der Rotornabe eine Zugangsöffnung für das Wartungspersonal vorzusehen. Beispielsweise kann die Zugangsöffnung in einem seitlich eingezeichneten Bereich A des Nabenkernkörpers 12, der nahe am Anschluss zur Rotorwelle bzw. nahe am Ringflansch 14 liegt, oder an bzw. in einem der Nabenaußenkörper 16 ausgebildet sein.

Vorzugsweise ist der Winkel α zwischen der Ebene 22 und der Drehachse 24 in der Größenordnung zwischen 10° bis 75°. Idealerweise ist der Winkel α in einer bevorzugten Ausführungsform größer als 15°, insbesondere zwischen 15° und 45°. Hierdurch wird es möglich, eine besonders kompakte Bauweise des Nabenkernkörpers 12 als Einzelbauteil nach Art eines Konus oder eines sich verjüngenden Körpers zu erreichen.

In Fig. 1 sind ferner die Lochkreisdurchmesser der Flanschverbindungen 18 und der Flanschverbindung 20 (Blattflanschverbindung) eingezeichnet. Hierbei ist zu entnehmen, dass der Durchmesser D_{R} der Flanschverbindung 20 größer ist als der Durchmesser D_{I} der Flanschverbindung 18 zwischen dem Nabenkernkörper 12 und dem Nabenaußenkörper 16. Darüber hinaus ist die Flanschverbindung 20 vorzugsweise in einer Ebene angeordnet, die im Wesentlichen parallel zur Drehachse 24 der Rotornabe 10 ist. Beispielsweise hat der Durchmesser D_{R} eine Größe von mehr als 4 m, insbesondere mehr als 4,5 m. Damit ist der Durchmesser D_{R} der Flanschverbindung größer als die Höhe h des Nabenkernkörpers 12 mit einem Wert von beispielsweise unter 4 m. Überdies ist in Fig. 1 die vorseitige Bauhöhe B des Nabenaußenkörpers 16 eingetragen, die bevorzugt nicht größer bzw. kleiner als die Höhe h des Nabenkernkörpers 12 ist und beispielsweise in einem Bereich von 2 m bis 3 m liegt.

In Fig. 2 ist überdies dargestellt, dass die Flanschverbindungen 18 zwischen dem Nabenkernkörper 12 und den drei Nabenaußenkörpern 16 gleichmäßig am Nabenkernkörper ausgebildet sind. Die Bohrungen der Schraubverbindungen an den Flanschverbindungen 18 sind hierbei gleichmäßig über dem Umfang verteilt, so dass dadurch mehr Schraubverbindungen am Flansch 18 zwischen den beiden Körpern 12 und 16 vorgesehen sind, als z.B. bei ovalen Flanschen, die parallel zur Rotorachse 24 liegen.

Insbesondere die großen Rotorblattbiegemomente in Windrichtung (Schlagmomente) können so besonders sicher aufgenommen werden.

### Bezugszeichenliste

- 10: Rotornabe
- 12: Nabenkernkörper
- 14: Ringflansch
- 16: Nabenaußenkörper
- 18: Flanschverbindung
- 20: Flanschverbindung
- 22: Ebene
- 24: Drehachse
- 26: Rotorblattachse
- 28: Zugangsöffnung
- α: Winkel
- A: Bereich
- B: Bauhöhe
- D_{R}: Durchmesser
- D_{I}: Durchmesser
- h: Höhe
- P: Schnittpunkt

## Patentansprüche

1. Rotornabe (10) einer Windenergieanlage für einen Rotor, insbesondere mit wenigstens einem Rotorblatt, wobei ein Nabenkernkörper (12) der Rotornabe (10) und wenigstens ein Nabenaußenkörper (16) der Rotornabe (10) mittels einer Flanschverbindung (18) miteinander verbunden sind oder werden, wobei der Nabenaußenkörper (16) eine Rotorblattanschlussfläche aufweist, **dadurch gekennzeichnet, dass** die Flanschverbindung (18) mit einer vorbestimmten Neigung (α) zur Drehachse (24) des Rotors ausgebildet ist, wobei die Neigung (α) der Flanschverbindung (18) stärker als die Neigung der Rotorblattanschlussfläche des Nabenaußenkörpers (16) ausgebildet ist.

2. Rotornabe (10) nach Anspruch 1, **dadurch gekennzeichnet, dass** die Höhe (h) des Nabenkernkörpers (12) kleiner als der Durchmesser (D_{R}) der Rotorblattanschlussfläche des Nabenaußenkörpers (16) ist.

3. Rotornabe (10) nach Anspruch 1 oder 2, **dadurch gekennzeichnet, dass** die Flanschverbindung (18) kreisförmig ausgebildet ist.

4. Rotornabe (10) einer Windenergieanlage für einen Rotor, insbesondere mit wenigstens einem Rotorblatt, wobei ein Nabenkernkörper (12) der Rotornabe (10) und wenigstens ein Nabenaußenkörper (16) der Rotornabe (10) mittels einer kreisförmigen Flanschverbindung (18) miteinander verbunden sind oder werden, wobei der Nabenaußenkörper (16) eine Rotorblattanschlussfläche aufweist, **dadurch gekennzeichnet, dass** die Höhe (h) des Nabenkernkörpers (12) kleiner als der Durchmesser (D_{R}) der kreisförmigen Rotorblattanschlussfläche des Nabenaußenkörpers (16) ist.

5. Rotornabe (10) nach einem der Ansprüche 1 bis 4, **dadurch gekennzeichnet, dass** mehrere Flanschverbindungen (18) zwischen dem Nabenkernkörper (12) und mehreren Nabenaußenkörpern (16) vorgesehen sind.

6. Rotornabe (10) nach einem der Ansprüche 1 bis 5, **dadurch gekennzeichnet, dass** mehrere Flanschverbindungen (18) gleichmäßig am Nabenkernkörper (12) vorgesehen sind.

7. Rotornabe (10) nach einem der Ansprüche 1 bis 6, **dadurch gekennzeichnet, dass** der Nabenaußenkörper (16) mit einem Rotorblatt verbunden ist.

8. Rotornabe (10) nach einem der Ansprüche 1 bis 7, **dadurch gekennzeichnet, dass** der Nabenaußenkörper (16) und der Nabenkernkörper (12) dauerhaft miteinander verbunden sind.

9. Rotornabe (10) nach einem der Ansprüche 1 bis 8, **dadurch gekennzeichnet, dass** am Nabenkernkörper (12) eine Zugangsöffnung (28) vorgesehen ist.

10. Rotornabe (10) nach Anspruch 9, **dadurch gekennzeichnet, dass** die Zugangsöffnung (28) im Bereich der Rotorachse (24) am Nabenkernkörper (12) ausgebildet ist.

11. Rotornabe (10) nach einem der Ansprüche 1 bis 10, **dadurch gekennzeichnet, dass** der Nabenaußenkörper (16) zur Rotorblattseite hin eine Flanschverbindung (20) aufweist.

12. Rotornabe nach Anspruch 11, **dadurch gekennzeichnet, dass** die rotorblattseitige Flanschverbindung (20) kreisförmig ausgebildet ist.

13. Rotornabe (10) nach Anspruch 11 oder 12, **dadurch gekennzeichnet, dass** der Durchmesser (D_{R}) der rotorblattseitigen Flanschverbindung (20) des Nabenaußenkörpers (16) größer als der Durchmesser (D_{I}) der, insbesondere kreisförmigen, nabenkernkörperseitigen Flanschverbindung (18) ist.

14. Windenergieanlage mit einer Rotornabe (10) nach einem der Ansprüche 1 bis 13.

## Claims

1. Rotor hub (10) of a wind power plant for a rotor, in particular with at least one rotor blade, wherein a hub core body (12) of the rotor hub (10) and at least one hub outer body (16) of the rotor hub (10) are connected to one another by means of a flange connection (18), wherein the hub outer body (16) has a rotor blade connection surface, **characterised in that** the flange connection (18) is constructed with a predetermined inclination (α) relative to the axis of rotation (24) of the rotor, wherein the inclination (α) of the flange connection (18) is greater than the inclination of the rotor blade connection surface of the hub outer body (16).

2. Rotor hub (10) as claimed in Claim 1, **characterised in that** the height (h) of the hub core body (12) is smaller than the diameter (D_{R}) of the rotor blade connection surface of the hub outer body (16).

3. Rotor hub (10) as claimed in Claim 1 or 2, **characterised in that** the flange connection (18) is of circular construction.

4. Rotor hub (10) of a wind power plant for a rotor, in particular with at least one rotor blade, wherein a hub core body (12) of the rotor hub (10) and at least one hub outer body (16) of the rotor hub (10) are connected to one another by means of a circular flange connection (18), wherein the hub outer body (16) has a rotor blade connection surface, **characterised in that** the height (h) of the hub core body (12) is smaller than the diameter (D_{R}) of the circular rotor blade connection surface of the hub outer body (16).

5. Rotor hub (10) as claimed in any one of Claims 1 to 4, **characterised in that** a plurality of flange connections (18) are provided between the hub core body (12) and a plurality of hub outer bodies (16).

6. Rotor hub (10) as claimed in any one of Claims 1 to 5, **characterised in that** a plurality of flange connections (18) are provided uniformly on the hub core body (12).

7. Rotor hub (10) as claimed in any one of Claims 1 to 6, **characterised in that** the hub outer body (16) is connected to a rotor blade.

8. Rotor hub (10) as claimed in any one of Claims 1 to 7, **characterised in that** the hub outer body (16) and the hub core body (12) are permanently connected to one another.

9. Rotor hub (10) as claimed in any one of Claims 1 to 8, **characterised in that** an access opening (28) is provided on the hub core body (12).

10. Rotor hub (10) as claimed in Claim 9, **characterised in that** the access opening (28) is constructed in the region of the rotor axis (24) on the hub core body (12).

11. Rotor hub (10) as claimed in any one of Claims 1 to 10, **characterised in that** the hub outer body (16) has a flange connection (20) to the rotor blade side.

12. Rotor hub (10) as claimed in Claim 11, **characterised in that** the flange connection (20) on the rotor blade side is of circular construction.

13. Rotor hub (10) as claimed in Claim 11 or 12, **characterised in that** the diameter (D_{R}) of the flange connection (20) of the hub outer body (16) on the rotor blade side is larger than the diameter (D1) of the in particular circular flange connection (18) on the hub core body side.

14. Wind power plant with a rotor hub (10) as claimed in any one of Claims 1 to 13.

## Revendications

1. Moyeu de rotor (10) d'une installation d'énergie éolienne pour un rotor, en particulier avec au moins une pale de rotor, dans lequel un élément central de moyeu (12) du moyeu de rotor (10) et au moins un élément extérieur de moyeu (16) du moyeu de rotor (10) sont reliés l'un à l'autre ou le deviennent au moyen d'un joint à brides (18), l'élément extérieur du moyeu (16) présentant une surface de raccordement à la pale de rotor, **caractérisé en ce que** le joint à brides (18) est réalisé avec une inclinaison prédéterminée (α) par rapport à l'axe de rotation (24) du rotor, l'inclinaison (α) du joint à brides (18) étant réalisée de façon plus forte que l'inclinaison de la surface de raccordement à la pale de rotor de l'élément extérieur du moyeu (16).

2. Moyeu de rotor (10) selon la revendication 1, **caractérisé en ce que** la hauteur (h) de l'élément central du moyeu (12) est inférieure au diamètre (D_{R}) de la surface de raccordement à la pale de rotor de l'élément extérieur du moyeu (16).

3. Moyeu de rotor (10) selon la revendication 1 ou 2, **caractérisé en ce que** le joint à brides (18) est réalisé dans une forme circulaire.

4. Moyeu de rotor (10) d'une installation d'énergie éolienne pour un rotor, en particulier avec au moins une pale de rotor, dans lequel un élément central de moyeu (12) du moyeu de rotor (10) et au moins un élément extérieur de moyeu (16) du moyeu de rotor (10) sont reliés l'un à l'autre ou le deviennent au moyen d'un joint à brides circulaire (18), l'élément extérieur du moyeu (16) présentant une surface de raccordement à la pale de rotor, **caractérisé en ce que** la hauteur (h) de l'élément central du moyeu (12) est inférieure au diamètre (D_{R}) de la surface de raccordement circulaire à la pale de rotor de l'élément extérieur du moyeu (16).

5. Moyeu de rotor (10) selon l'une des revendications 1 à 4, **caractérisé en ce que** plusieurs joints à brides (18) sont prévus entre l'élément central du moyeu (12) et plusieurs éléments extérieurs du moyeu (16).

6. Moyeu de rotor (10) selon l'une des revendications 1 à 5, **caractérisé en ce que** plusieurs joints à brides (18) sont prévus de façon régulière sur l'élément central du moyeu (12).

7. Moyeu de rotor (10) selon l'une des revendications 1 à 6, **caractérisé en ce que** l'élément extérieur du moyeu (16) est relié à une pale de rotor.

8. Moyeu de rotor (10) selon l'une des revendications 1 à 7, **caractérisé en ce que** l'élément extérieur du moyeu (16) et l'élément central du moyeu (12) sont reliés l'un à l'autre de façon permanente.

9. Moyeu de rotor (10) selon l'une des revendications 1 à 8, **caractérisé en ce qu'**une ouverture d'accès (28) est prévue sur l'élément central du moyeu (12).

10. Moyeu de rotor (10) selon la revendication 9, **caractérisé en ce que** l'ouverture d'accès (28) est réalisée dans la zone de l'axe du rotor (24) sur l'élément central du moyeu (12).

11. Moyeu de rotor (10) selon l'une des revendications 1 à 10, **caractérisé en ce que** l'élément extérieur du moyeu (16) présente un joint à brides (20) avec le côté de la pale de rotor.

12. Moyeu de rotor selon la revendication 11, **caractérisé en ce que** le joint à brides situé du côté de la pale de rotor (20) est réalisé dans une forme circulaire.

13. Moyeu de rotor (10) selon la revendication 11 ou 12, **caractérisé en ce que** le diamètre (D_{R}) du joint à brides situé du côté de la pale de rotor (20) de l'élément extérieur du moyeu (16) est supérieur au diamètre (D_{I}) du joint à brides situé du côté de l'élément central du moyeu, en particulier de forme circulaire (18).

14. Installation d'énergie éolienne comprenant un moyeu de rotor (10) selon l'une des revendications 1 à 13.
